# EUROPEAN PATENT APPLICATION

(11) **EP 4 310 703 A1**
(43) Date of publication of application: **24.01.2024**
(21) Application number: 22185872.3
(22) Date of filing: 19.07.2022
(51) Int. Cl.: G06F 21/12

(54) **CONTROLLING ACCESS TO A TRUSTED COMPUTING ENVIRONMENT**

(71) Applicant: Nagravision Sàrl, 1033 Cheseaux-sur-Lausanne (CH)
(72) Inventor: AVIOLAT, Romain, Cheseaux-sur-Lausanne (CH); DUMONT, Pierre, Cheseaux-sur-Lausanne (CH)
(74) Representative: Mewburn Ellis LLP

(57) **Abstract**

A computer-implemented method for controlling access by a third-party continuous integration/continuous delivery (herein, "CI/CD") system to a trusted computing environment comprises: receiving, from the CI/CD system, a request to access the trusted computing environment in order to execute a first operation; in response to receiving the request to access the trusted computing environment, executing a security protocol configured to determine whether execution of the first operation is permitted, the determination based at least on first metadata, which is generated based on a portion of the request corresponding to the first operation, wherein: if it is determined that execution of the first operation is permitted, the computer-implemented method further comprises granting access to the CI/CD system, thereby enabling it to execute the first operation; and if it is determined that execution of the first operation is not permitted, the computer-implemented method further comprises preventing the CI/CD from executing the first operation. An equivalent interceptor module, computer program, and computer-readable medium are also provided.

## Description

### TECHNICAL FIELD OF THE INVENTION

The present invention relates to computer-implemented methods for controlling access by a CI/CD system to a trusted computing environment. An interceptor module, computer program, and computer-readable medium are also provided.

### BACKGROUND TO THE INVENTION

Nowadays, automation is key to maintain the life cycle of software or infrastructure. Manual software updates do not scale, is error prone, and does not fit anymore with modern infrastructures where the change-rate is high.

Automation is usually performed using CI/CD pipelines or "DevOps" workflows, those workflows are sometimes managed by 3rd parties like SaaS (Software as a Service) vendors (Github, Gitlab, etc.) or by another entity of a company such as an IT (Information Technology) department.

Typically, those CI/CD systems have privileged accesses to the target infrastructure or system as they need to be able to configure or deploy components on top of them. As a result, this is a very lucrative target for attackers as a successful compromise of such system could give them access to many remote systems and credentials.

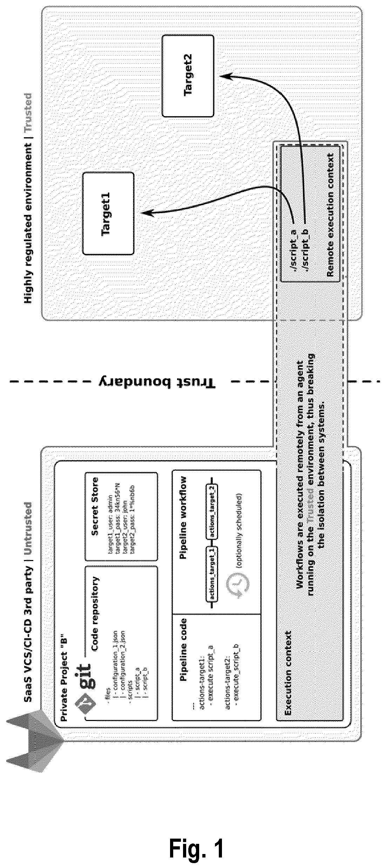

The problems with existing systems are highlighted in Fig. 1.
- On the left is a DevOps platform or CI/CD system that is managed by a third party and where the trust level is lower than in the highly regulated environment on the right. The platform hosts the code and then logic that is applied on the target infrastructure (right-hand side) as well as some credentials to authenticate on the target infrastructure or system.
- In order for an agent to be deployed on the trusted computing environment on the right-hand side, to execute an automated operation, the security of the trusted computing environment must be "breached" by the third party, as illustrated by the section of the CI/CD system jutting into the trusted computing environment on the right-hand side.

The present invention has been devised in light of the problem outlined above.

### SUMMARY OF THE INVENTION

The present invention aims to address the issues set out in the previous section in the provision of a computer-implemented method in which a security protocol is executed in a trusted computing environment before an operation may be executed in the trusted computing environment. In this way, it is possible to ensure that no unauthorized operations can be executed within the trusted computing environment. Specifically, a first aspect of the present invention provides a computer-implemented method for controlling access by a third-party continuous integration/continuous delivery (herein, "CI/CD") system to a trusted computing environment, the computer-implemented method comprising: receiving, from the CI/CD system, a request to access the trusted computing environment in order to execute a first operation; in response to receiving the request to access the trusted computing environment, executing a security protocol configured to determine whether execution of the first operation is permitted, the determination based at least on first metadata, which is generated based on a portion of the request corresponding to the first operation, wherein: if it is determined that execution of the first operation is permitted, the computer-implemented method further comprises granting access to the CI/CD system, thereby enabling it to execute the first operation; and if it is determined that execution of the first operation is not permitted, the computer-implemented method further comprises preventing the CI/CD from executing the first operation.

In the context of the present application, the term "third-party" is used to refer to an external party or service which is employed to provide software updates or other software-based services to the trusted computing environment. Continuous integration and continuous delivery are a set of operating principles often used by software developers in order to deliver changes to code reliably and frequently. Continuous integration is the practice of merging all developers' working copies to a shared mainline several times a day. Continuous delivery (CD) is a software engineering approach in which teams produce software in short cycles, ensuring that the software can be reliably released at any time and, when releasing the software, without doing so manually. It aims at building, testing, and releasing software with greater speed and frequency. The approach helps reduce the cost, time, and risk of delivering changes by allowing for more incremental updates to applications in production. A straightforward and repeatable deployment process is important for continuous delivery.

Continuous delivery is similar to, but contrasts with, continuous deployment (sometimes CI/CD is also used to refer to "continuous integration/continuous deployment", which should also be considered to fall within the scope of the present application), a similar approach in which software is also produced in short cycles but through automated deployments rather than manual ones.

It should be stressed that computer-implemented methods according to the present invention are able to handle both continuous deployment and continuous delivery scenarios. The term "CI/CD system" may be understood broadly to cover a third-party system which operates on the basis of continuous deployment and/or continuous delivery. In other words, the first (and any other) operation may be an automated operation. Alternatively, the operation may be one which is manually deployed by e.g. a user of the CI/CD system. The manner in which the present invention deals with these differing scenarios will be set out in more detail later in this patent application.

In the context of the present application, the term "trusted computing environment" refers to a system that is relied upon to a specified extent to enforce a specific security policy. Equivalently, a trusted system is one whose failure would break a security policy. A trusted computing environment is one that the user feels safe to use, and trusts to perform tasks without secretly executing harmful or unauthorized programs; trusted computing refers to whether programs can trust the platform to be unmodified from the expected, and whether or not those programs are innocent or malicious or whether they execute tasks that are undesired by the user. A trusted computing environment might be, for example, a local network of computing devices all belonging to the same company, and which enforce that company's security policy. Crucially, in the context of the present application, the third-party CI/CD system is not part of the trusted computing environment.

The term "operation" is intentionally broad,and refers to any computing process which may be executed on a target device or target devices comprised in the trusted computing environment. Examples of operations which the CI/CD may be configured to execute include software updates, system configuration, system upgrade, system checks/monitoring, system provisioning (e.g. in the context of cloud infrastructure), application rollout/deployment, and application release/packaging....

Execution of the first operation by the CI/CD system may comprise execution of a first piece of code, wherein execution of the first piece of code causes execution of the first operation. In some cases, a piece of code which is executed to give rise to execution of an operation may be referred to as a script. Generally, a piece of code may be understood to comprise a set of electronic instructions, which when executed by e.g. a processor of a computing device (e.g. a target device of the trusted computing environment) cause the processor or computing device to execute an operation. The code may be in any of a plurality of well-known computing languages, and may be, for example in text format. In addition to the first metadata, the request may comprise the piece of code or script, execution of which causes execution of the first operation. It should be stressed that when the piece of code or script is received (i.e. in the request), it is not immediately executed. It is central to the present invention that the security protocol is executed before the piece of code or script may be executed.

We now discuss in more detail the first metadata which included in the request from the CI/CD system. The term "metadata" is used to refer to data that provides information about other data. In the present case, the first metadata may comprise a digital signature corresponding to the first operation. The computer-implemented method of the first aspect of the invention may comprise generating the first metadata based on a portion of the request corresponding to the first operation. This may be, for example, the first piece of code. Alternatively, the request may comprise the first metadata as well as the substantive content of the request.

In preferred cases, the first digital signature is a hash which is generated based on the first piece of code. For example, the first digital signature may be a hash which is generated from a portion of, or all, of the first piece of code. The hash may be generated using any suitable hashing algorithm, such as SHA256, or any other well-known hashing function. For completeness, we note that a hashing algorithm is a function which maps data of arbitrary size to fixed-size values. The value returned by the hash algorithm is known as the hash. An important feature of a hash function is that a small change in the input can lead to a drastic change in the resulting hash, which enables tampering to be easily detected.

We now discuss in more detail the nature of the security protocol. Execution of the security protocol may comprise accessing a permitted operations database storing one or more digital signatures, each digital signature corresponding to a respective operation, execution of which is permitted within the trusted computing environment. Execution of the security protocol may further comprise determining whether the first digital signature is present in the permitted operation database (i.e. to determine whether the requested operation is allowed). Then, if the first digital signature is present in the permitted operation database (or more specifically, if it is determined that the first digital signature is present in the permitted operation database), it is determined that execution of the first operation is permitted. And, if the first digital signature is not present in the permitted operations database (or more specifically, if it is determined that the first digital signature is not present in the permitted operations database), it is determined that execution of the first operation is not permitted.

To maintain security, and to minimize the risk that unauthorized operations are executed within the trusted computing environment, the permitted operations database is preferably not accessible to the CI/CD. Herein, we mean that the CI/CD is preferably not able to view, read, edit, or otherwise access the data which is stored in the permitted operations database.

Naturally, the trusted computing environment may be able to deal with requests pertaining to the execution of more than one operation. Accordingly, receiving the request from the CI/CD system may comprise receiving from the CI/CD system a request to access the trusted computing environment in order to execute a first operation and a second operation. Execution of the security protocol may further comprise determining whether execution of the second operation is permitted based on second metadata generated based on a portion of the request corresponding to the second operation.

Execution of the second operation by the CI/CD system may comprise execution of a second piece of code, wherein execution of the second piece of code causes execution of the second operation. In some cases, a piece of code which is executed to give rise to execution of an operation may be referred to as a script. Generally, a piece of code may be understood to comprise a set of electronic instructions, which when executed by e.g. a processor of a computing device (e.g. a target device of the trusted computing environment) cause the processor or computing device to execute an operation. The code may be in any of a plurality of well-known computing languages, and may be, for example in text format. In addition to the second metadata, the request may comprise the piece of code or script, execution of which causes execution of the second operation. It should be stressed that when the piece of code or script is received (i.e. in the request), it is not immediately executed. It is central to the present invention that the security protocol is executed before the piece of code or script may be executed.

We now discuss in more detail the second metadata which included in the request from the CI/CD system. The term "metadata" is used to refer to data that provides information about other data. In the present case, the second metadata may comprise a digital signature corresponding to the second operation. The computer-implemented method of the second aspect of the invention may comprise generating the second metadata based on a portion of the request corresponding to the second operation. This may be, for example, the second piece of code. Alternatively, the request may comprise the second metadata as well as the substantive content of the request. In these cases, executing the security protocol may further comprise determining whether the second digital signature is present in the permitted operations database. If the second digital signature is present in the permitted operations database (or more specifically, if it is determined that the second digital signature is present in the permitted operations database), it may then be determined that execution of the second operation is permitted. If the second digital signature is not present in the permitted operations database (or more specifically, if it is determined that the second digital signature is not present in the permitted operations database), it may then be determined that execution of the second operation is not permitted.

In preferred cases, the second digital signature is a hash which is generated based on the second piece of code. For example, the second digital signature may be a hash which is generated from a portion of, or all, of the second piece of code. The hash may be generated using any suitable hashing algorithm, such as SHA256, or any other well-known suitable hashing algorithm.

We refer herein to a "first operation" and a "second operation". It will be noted, however, that this is straightforwardly generalizable to a plurality of operations containing any number of operations. The first operation and the second operation may differ in a number of ways. For example, the first operation may be executable on a first target computing device (or set of target computing devices) and the second operation may be executable on a second target computing devices (or set of target computing devices). Alternatively, the first operation may be a different operation from the second operation (i.e. the nature of the operation differs). In other cases, the first operation may be due to be executed at a different time from the second operation. The first operation and the second operation may differ in one or more of these ways. Other differences between the first operation and the second operation are also envisaged.

After it is determined whether execution of the second operation is permitted, based on second metadata, if it is determined that execution of the second operation is permitted, the computer-implemented method may further comprise granting access to the CI/CD system, thereby enabling it to execute the second operation. On the other hand, if it is determined that execution of the second operation is not permitted, the computer-implemented method may further comprise preventing the CI/CD system from executing the second operation. In some cases, one of the first operation and the second operation may be permitted and the other of the first operation and the second operation may not be permitted. In these cases, access may be granted to the CI/CD system in respect only of the permitted operation, and access may be prevented in respect of the not-permitted operation.

Alternatively put, the computer-implemented method may comprise: receiving from the CI/CD system, a request to access the trusted computing environment in order to execute a first operation and a second operation; in response to receiving the request to access the trusted computing environment, executing a security protocol to determine whether execution of the first operation is permitted based at least on first metadata generated from the portion of the request corresponding to the first operation, and to determine whether execution of the second operation is permitted based at least on second metadata generated from the portion of the request corresponding to the second operation; determining that execution of the first operation is permitted and that execution of the second operation is not permitted; in response to the determination that execution of the first operation is permitted, granting access to the CI/CD system in respect of the first operation, thereby enabling the CI/CD system to execute the first operation in the trusted computing environment; and in response to the determination that execution of the second operation is not permitted, preventing access from the CI/CD in respect of the second operation, thereby preventing the CI/CD from executing the second operation.

The above disclosure relates to a determination of whether an operation is permitted based on metadata relating to the operation itself. Additionally, or alternatively, the security protocol may also make determinations as to whether execution of an operation is permitted based on the source of the request, e.g. a particular user or device that is part of the CI/CD system.

Accordingly, the first metadata may comprise a first user ID, the first user ID corresponding a first user of the CI/CD system from whom the request originated. It should be noted that this does not necessarily mean that the user actively sent the request. Rather, this should be understood to mean that an action of the user, e.g. updating central repository of code, leads to an automated request being generated. In other cases, the CI/CD system may originate a request on behalf of a user who scheduled the request.

When the metadata comprises a first user ID, executing the security protocol may comprise accessing a permitted user database storing one or more user IDs, each user ID corresponding to a respective user of the CI/CD system who is permitted to cause execution of an operation within the trusted computing environment. Executing the security protocol may further comprise determining whether the first user ID is present in the permitted user base. Then, if the first user ID is present in the permitted user database (or more specifically, if it is determined that the first user ID is present in the permitted user database), it is determined that execution of the first operation is permitted. And, if the first user ID is not present in the permitted user database (or more specifically, if it is determined that the first user ID is not present in the permitted user database), it is determined that execution of the first operation is not permitted.

It has been discussed previously that the request may be a request to execute a first operation and a second operation on the trusted computing environment. In some cases, the portion of the request in respect of the first operation may originate with a first user having a first user ID, and the portion of the request in respect of the second operation may originate with a second user having a second user ID. In this case, the second metadata may comprise the second user ID. And, executing the security protocol may further comprise determining whether the second user ID is present in the permitted user base. Then, if the second user ID is present in the permitted user database (or more specifically, if it is determined that the second user ID is present in the permitted user database), it is determined that execution of the second operation is permitted. And, if the second user ID is not present in the permitted user database (or more specifically, if it is determined that the second user ID is not present in the permitted user database), it is determined that execution of the second operation is not permitted.

In addition simply to checking whether a particular user ID is permitted, in some cases, an authentication protocol may also be executed, as part of the security protocol. Specifically, executing the security protocol may comprise accessing a permitted user database storing one or more user IDs, each user ID corresponding to a respective user who is permitted to trigger execution of an automated operation in the trusted computing environment. Then, execution of the security protocol may further comprise determining whether the first user ID is present in the permitted user database. This is as before, but the computer-implemented method may then differ. If the first user ID is not present in the permitted user database (or more specifically, if it is determined that the first user ID is not present in the permitted user database), it is determined that execution of the first operation is not permitted. Or, if the first user ID is present in the permitted user database (or more specifically, if it is determined that the first user ID is present in the permitted user database), execution of the security protocol may further comprise executing an authentication protocol in order to authenticate the first user. In response to execution of the authentication protocol, if the first user is authenticated, it is determined that execution of the first operation is permitted. Similarly, in response to execution of the authentication protocol, if the first user is not authenticated, it is determined that execution of the first operation is not permitted. Herein, "to authenticate" the user refers to a process during which a user's credentials are assessed. This could be in the form of e.g. requesting a username and password, or other form of identification, such as biometric identification in the form of a fingerprint, image recognition, or other biometric identification. In preferred implementations, the authentication is a multi-factor authentication method. Examples of well-known multi-factor authentication methods include hardware one-time passwords (OTP) tokens, standalone OTP mobile applications, SMS based OTPs, smartcards (and other cryptographic hardware tokens, and biometrics).

Essentially, the purpose of the authentication is to prompt the actual user to prove that they are who they are alleging to be. Herein, when a user is "authenticated", this means that they have successfully "passed" the authentication protocol.

Naturally, the process set out above in respect of the first user also applies to the second user. Specifically, execution of the security protocol may further comprise determining whether the second user ID is present in the permitted user database. This is as before, but the computer-implemented method may then differ. If the second user ID is not present in the permitted user database (or more specifically, if it is determined that the second user ID is not present in the permitted user database), it is determined that execution of the second operation is not permitted. Or, if the second user ID is present in the permitted user database (or more specifically, if it is determined that the second user ID is present in the permitted user database), execution of the security protocol may further comprise executing an authentication protocol in order to authenticate the second user. In response to execution of the authentication protocol, if the second user is authenticated, it is determined that execution of the second operation is permitted. Similarly, in response to execution of the authentication protocol, if the second user is not authenticated, it is determined that execution of the second operation is not permitted.

In order to differentiate between the possible outcomes, it is instructive to consider a request comprising a portion originating from a first user in respect of a first operation, and a portion originating from a second user in respect of a second operation. "First" and "second" may be arbitrarily interchanged. Three scenarios may then arise in which there are different outcomes for the first user/operation and second user/operation:
**i. The first user may be a permitted user and successfully authenticated; and the second user may not be a permitted user.** In this case, the computer-implemented method may comprise the following steps: receiving from the CI/CD system, a request to access the trusted computing environment in order to execute a first operation originating from a first user having a first user ID and a second operation originating from a second user having a second user ID; executing a security protocol to determine whether the first user ID and/or second user ID are present in the permitted user database; determining that the first user ID is present in the permitted user database; in response to determining that determining first user ID is present in the permitted user database, execution of the security protocol further comprises executing an authentication protocol in order to authenticate the first user; in response to a determination that the first user is authenticated, determining that execution of the first operation is permitted; determining that the second user ID is not present in the permitted user database; and in response to determining that the second user ID is not present in the permitted user database, determining that execution of the second operation is not permitted. It should be noted that the step of determining that the second user ID is not present in the permitted user database may take place at the same time as, or immediately after, the determination that the first user ID is present in the permitted user database.
**ii. The first user may be a permitted user and successfully authenticated; and the second user may be a permitted user but not successfully authenticated.** In this case, the computer-implemented method may comprise the following steps: receiving from the CI/CD system, a request to access the trusted computing environment in order to execute a first operation originating from a first user having a first user ID and a second operation originating from a second user having a second user ID; executing a security protocol to determine whether the first user ID and/or second user ID are present in the permitted user database; determining that the first user ID and the second user ID are present in the permitted user database; in response to determining that determining first user ID and the second user ID are present in the permitted user database, execution of the security protocol may further comprise executing an authentication protocol in order to authenticate the first user and the second user; in response to a determination that the first user is authenticated, determining that execution of the first operation is permitted; and in response to a determination that the second user is not authenticated, determining that execution of the second operation is not permitted.
**iii. The first user may be a permitted user but not successfully authenticated; and the second user may not be a permitted user.** In this case, the computer-implemented method may comprise the following steps: receiving from the CI/CD system, a request to access the trusted computing environment in order to execute a first operation originating from a first user having a first user ID and a second operation originating from a second user having a second user ID; executing a security protocol to determine whether the first user ID and/or second user ID are present in the permitted user database; determining that the first user ID is present in the permitted user database; in response to determining that determining first user ID is present in the permitted user database, execution of the security protocol further comprises executing an authentication protocol in order to authenticate the first user; in response to a determination that the first user is not authenticated, determining that execution of the first operation is not permitted; and in response to a determination that the second user ID is not present in the permitted user database, determining that execution of the second operation is not permitted.

From the preceding disclosure, it will be appreciated that there are effectively three types of security check which may be employed in the computer-implemented method of the first aspect of the invention: (i) a check based on a digital signature (which relates to the nature of the operation or operations to be performed); (ii) a check whether a user ID of a user from whom a request for an operation originates is present in a permitted user database (essentially to check that the operation originates from a permitted user); and (iii) an authentication process (to check that the request actually originates from the user associated with the user ID, rather than e.g. a malicious actor posing as that user). The present invention may include one, any two, or all three of these checks. Check (i) is particularly useful where the operation is an automated operation which does not originate with any user in particular (e.g. a scheduled update). Where the operation in question originates from a specific user, it is preferable that checks (ii) and/or (iii) are performed. It preferable, in those cases, that check (i) is also performed. Importantly, execution of an operation may only be permitted in the event that all checks which are applied are passed.

The computer-implemented method of the first aspect of the invention preferably takes place on a device which is located within or forms part of the trusted computing environment. Alternatively, the computer-implemented method of the first aspect of the invention may be executed by a device which acts as a gateway to the trusted computing environment. In either case, the computer-implemented method of the first aspect of the invention is preferably executed by an interceptor module which is configured to intercept the request from the CI/CD system before an operation is executed in the trusted computing environment. The interceptor module may include, or be in the form of, a processor which is configured to execute the method steps of the computer-implemented method of the first aspect of the invention.

Accordingly, a second aspect of the present invention may provide an interceptor module or device for controlling access by a third-party CI/CD system to a trusted computing environment, the interceptor device or module configured to execute a computer-implemented method comprising: receiving, from the CI/CD system, a request to access the trusted computing environment in order to execute a first operation; in response to receiving the request to access the trusted computing environment, executing a security protocol configured to determine whether execution of the first operation is permitted, the determination based at least on first metadata, which is generated based on a portion of the request corresponding to the first operation, wherein: if it is determined that execution of the first operation is permitted, the computer-implemented method further comprises granting access to the CI/CD system, thereby enabling it to execute the first operation; and if it is determined that execution of the first operation is not permitted, the computer-implemented method further comprises preventing the CI/CD from executing the first operation. The interceptor device or module may comprise a processor which is configured to execute the computer-implemented method. It will be appreciated that the second aspect of the invention is configured to execute the computer-implemented method of the first aspect of the invention. Accordingly, all of the features which were set out earlier in this application in respect of the first aspect of the invention apply equally well to the second aspect of the invention, except where context dictates otherwise or where clearly technically incompatible.

A third aspect of the invention may provide a trusted computing environment or computing system comprising at least one target computing device and the interceptor device or module of the second aspect of the invention. Optional features which have been set out in respect of the first aspect of the invention may also apply to the third aspect of the invention except where clearly technically incompatible, or where context dictates otherwise. The computing system or trusted computing environment may comprise just one computing device which is the target computing device, and which comprises the interceptor device or module. The trusted computing environment or computing system may comprise a plurality of target devices, and a separate interceptor module or device. Alternatively, one of the target devices may comprise the interceptor module or device.

A fourth aspect of the invention provides a computer program comprising instructions which, when the program is executed by a computer, cause the computer to carry out a computer-implemented method for controlling access by a third-party CI/CD system to a trusted computing environment, the computer-implemented method comprising: receiving, from the CI/CD system, a request to access the trusted computing environment in order to execute a first operation; in response to receiving the request to access the trusted computing environment, executing a security protocol configured to determine whether execution of the first operation is permitted, the determination based at least on first metadata, which is generated based on a portion of the request corresponding to the first operation, wherein: if it is determined that execution of the first operation is permitted, the computer-implemented method further comprises granting access to the CI/CD system, thereby enabling it to execute the first operation; and if it is determined that execution of the first operation is not permitted, the computer-implemented method further comprises preventing the CI/CD from executing the first operation. It will be appreciated that the fourth aspect of the invention is a computer program configured to cause a computer to execute the computer-implemented method of the first aspect of the invention. Accordingly, all of the features which were set out earlier in this application in respect of the first aspect of the invention apply equally well to the fourth aspect of the invention, except where context dictates otherwise or where clearly technically incompatible.

A fifth aspect of the invention provides a computer-readable storage medium comprising instructions which, when executed by a computer, cause the computer to execute a computer-implemented method for controlling access by a third-party CI/CD system to a trusted computing environment, the computer-implemented method comprising: receiving, from the CI/CD system, a request to access the trusted computing environment in order to execute a first operation; in response to receiving the request to access the trusted computing environment, executing a security protocol configured to determine whether execution of the first operation is permitted, the determination based at least on first metadata, which is generated based on a portion of the request corresponding to the first operation, wherein: if it is determined that execution of the first operation is permitted, the computer-implemented method further comprises granting access to the CI/CD system, thereby enabling it to execute the first operation; and if it is determined that execution of the first operation is not permitted, the computer-implemented method further comprises preventing the CI/CD from executing the first operation. It will be appreciated that the fifth aspect of the invention is a computer-readable medium comprising instructions, which when executed, cause a computer to execute the computer-implemented method of the first aspect of the invention. Accordingly, all of the features which were set out earlier in this application in respect of the fifth aspect of the invention apply equally well to the third aspect of the invention, except where context dictates otherwise or where clearly technically incompatible.

The invention includes the combination of the aspects and preferred features described except where such a combination is clearly impermissible or expressly avoided.

### BRIEF DESCRIPTION OF THE DRAWINGS

Embodiments of the present invention will now be described with reference to the accompanying drawings, in which:
- Fig. 1 is a schematic illustrating limitations experienced in prior art systems.
- Fig. 2 is a schematic of a trusted computing environment, which contains an interceptor module which may execute a computer-implemented method of the present invention.
- Fig. 3 is a flowchart illustrating a computer-implemented method according to the present invention.
- Fig. 4 is an example of an aspect of a security protocol which may be executed as part of a computer-implemented method according to the present invention.
- Fig. 5 is an example of another aspect of a security protocol which may be executed as part of a computer-implemented method according to the present invention.

### DETAILED DESCRIPTION OF THE DRAWINGS

Aspects and embodiments of the present invention will now be discussed with reference to the accompanying figures. Further aspects and embodiments will be apparent to those skilled in the art. All documents mentioned in this text are incorporated herein by reference.

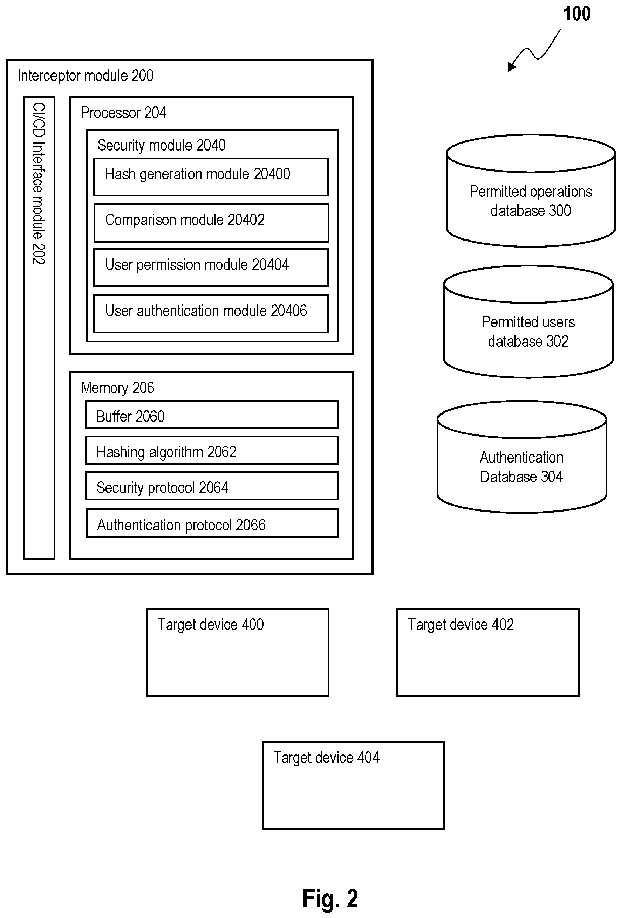

Fig. 2 shows an example of a trusted computing environment 100 in which interceptor module 200 is located. Interceptor module 200 is a component which may perform a computer-implemented method according to the first aspect of the present invention. The trusted computing environment 100 also include a permitted operations database 300, a permitted users database 302, and an authentication database 304. In addition, the trusted computing environment 100 also includes a plurality of target devices 400, 402, 404. The target devices 400, 402, 404 may be any kind of electronic computing devices, e.g. desktop computers, laptop computers, smartphones, tablets, servers, and the like. The various components in the trusted computing environment 100 may be connected via a network (not shown). The network may be a wired network (e.g. a LAN or WAN) or a wireless network (e.g. a Wi-Fi network, a cellular network, or the Internet). In some cases, as has been noted earlier in this patent application, the interceptor module 200 may be part of one of the target devices 400, 402, 404, or it may be a separate standalone device. Before discussing in detail the structure and function of the interceptor module 200, we first note that, in the context of the present patent application, the term "module" is used to refer to a module which may be implemented either in hardware (e.g. as a standalone physical component or piece of circuitry) or software (e.g. as a portion of code or electronic file) which is adapted to execute a specific function. The interceptor module 200 comprises CI/CD interface module 202, processor 204, and memory 206. The processor 204 includes a security module 2040 which comprises a hash generation module 20400, a comparison module 20402, a user permission module 20404, and a user authentication module 20406. The memory 206 includes a buffer (or temporary memory) 2060, and also stores a hashing algorithm 2062, a security protocol 2064, and an authentication protocol 2066.

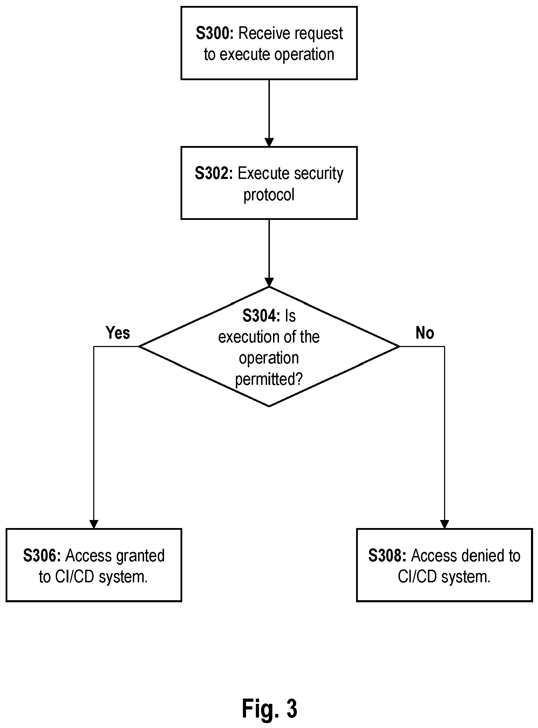

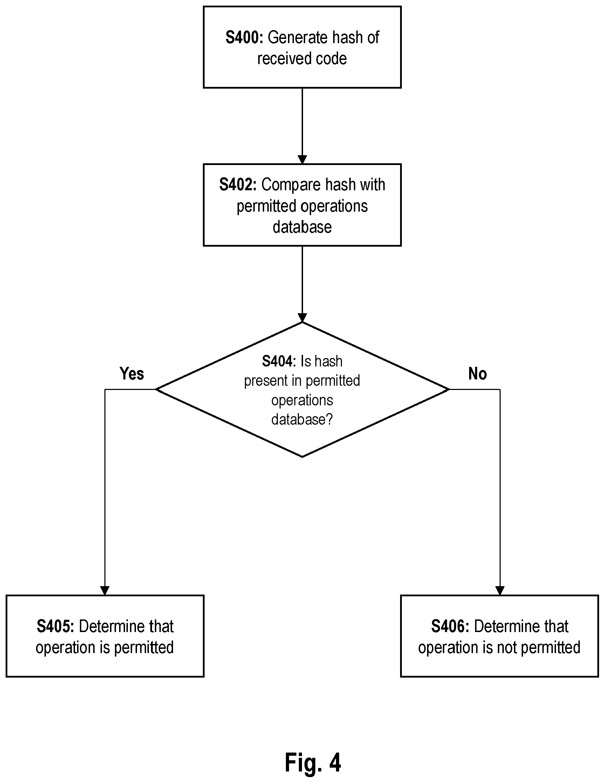

We now discuss the operation of the interceptor module 200. A high-level flowchart is shown in Fig. 3. In step S300, a request is received from a CI/CD system (not shown), the request being to execute an operation on one or more of the target devices 400, 402, 404 of the trusted computing environment 100. The interceptor module 200, as the name suggests, intercepts the request before it reaches the target device 400, 402, 404 in question. The interceptor module 200 receives the request via the CI/CD interface module 202, whereupon the request is transmitted to the security module 2040 of the processor 204 of the interceptor module 200. In step S302, the security protocol 2064 is executed by the security module 2040. The security protocol executed in step S302 may include various different facets, which will now be described with reference to Figs. 4 to 6.

Fig. 4 is a flowchart illustrating one possible aspect of the security protocol. The request received by the CI/CD system in step S300 of Fig. 3 preferably includes a piece of code, execution of which gives rise to execution of the operation on one of the target devices 400, 402, 404 in the trusted computing environment 100. In a first step S400 of Fig. 4, the interceptor module 200, more specifically the hash generation module 20400 of the security module 2040 of the processor 204 thereof, generates a hash of the received piece of code, for example by retrieving and applying hashing algorithm 2062 which is stored in memory 206 of the interceptor module 200. It should be noted that in alternative implementations, the request may contain the piece of code and the hash thereof, in which case the interceptor module 200 need not generate the hash. In such cases, step S400 may be replaced with, for example, extracting the hash from the request. In some cases, the hash may be generated based on only a portion of the piece of code, but the principle is the same. Having generated the hash (or otherwise), in step S402, the comparison module 20402 compares the generated hash with a plurality of hash values which are stored in the permitted operations database 300. The permitted operations database 300 stores a plurality of hashes of operations which are permitted to be performed on a target device 400, 402, 404 of the trusted computing environment 200. In other words, if a hash is present in the permitted operations database 300, it is permitted to execute the operation defined by the code which is used to generate that hash. Based on the comparison in step S402, in step S404, it is determined whether the hash is present in the permitted operations database 300. If so, in step S405, it is determined that the operation which forms the subject of the request is permitted to be executed on a target device 400, 402, 404 of the trusted computing environment 200. If not, in step S406, it is determined that the operation which forms the subject of the request is not permitted to be executed on a target device 400, 402, 404 of the trusted computing environment 200.

Fig. 4 relates to a security process which relates to the nature of the operation which forms the subject of the request, or more specifically, the piece of code which defines the operation. This is useful in the context of automated operations.

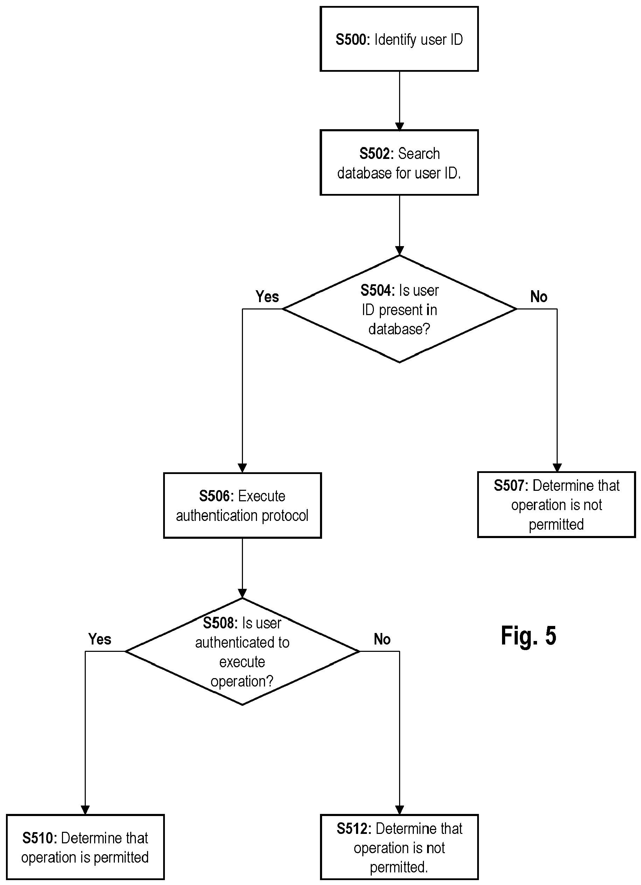

In another example of an aspect of a security protocol, which may be performed instead of or in addition to the process of Fig. 4, and is depicted in Fig. 5, validation of whether an execution may be permitted is based on the identity of a user with whom the request originated. In step S500, the user with whom the request generated is identified. This may be based on e.g. metadata in the request which defines the user, or includes a user ID. In step S502, the user permission module 20404 of the security module 2040 of the processor 204 of the interceptor module 200 accesses the permitted users database 302. The permitted users database 302 stores a list of users, requesting originating with whom are permitted to be executed operations on target devices 400, 402, 404 of the trusted computing environment 200. In step S502, the user permission module 20404 searches (or equivalent) the permitted users database 302 for the user ID (or the like) of the user with whom the request originated. In step S504, based on the results of the search in step S502, it is determined whether the user ID is present in the permitted users database 302. Then, in step S506, if it is determined that the user ID is present in the permitted user database 302, an authentication protocol is executed. In step S507, if it is determined that the user ID is not present in the permitted users database 302, it is determined that execution of the operation which formed the subject of the request is not permitted to be executed on a target device 400, 402, 404 of the trusted computing environment 200.

In some cases, rather than execute an authentication protocol, if it is determined that the user ID is present in the permitted users database 302, it is then determined that the operation which forms the subject of the request is permitted to be executed on a target device 400, 402, 404 of the trusted computing environment 200. Returning to the authentication protocol. In such a protocol, the user may be prompted e.g. via a GUI to input one or more pieces of authentication information. Then, the user authentication module 20406 of the security module 2040 of the processor 204 of the interceptor module 200 may be configured to retrieve and execute authentication protocol 2066 which is stored in memory 206. Execution of the authentication protocol 2066 by the user authentication module 20406 may comprise accessing authentication database 304 to determine whether the received authentication information is valid, i.e. whether the user is authenticated. Based on this, step S508, it is determined whether the user is authenticated. Then, in step S510, if it is determined that the user is authenticated, it is determined that the operation which formed the subject of the request is permitted to be operated on a target device 400, 402, 404 of the trusted computing environment 200. Alternatively, in step S512, if it is determined that the user is not authenticated, it is determined that the operation which formed the subject of the request is not permitted to be operated on a target device 400, 402, 404 of the trusted computing environment 200.

If it is determined that the user ID is not present in the permitted operations database, then in step S508 it is determined that the operation which forms the subject of the request is not permitted to be executed on a target device 400, 402, 404 of the trusted computing environment 200.

At this point, execution of the security protocol of step 302 of Fig. 3 is complete. Then, based on the results of the execution of the security protocol in step S302, in step S304 it is determined whether execution of the operation is permitted. If so, in step S306, access is granted to the CI/CD system, such that the operation which formed the subject of the request may be executed, e.g. via an agent. Conversely, if it is determined that execution of the operation is not permitted, access is denied to the CI/CD system, and the operation is not executed.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method for controlling access by a third-party continuous integration/continuous delivery (herein, "CI/CD") system to a trusted computing environment, the computer-implemented method comprising:
receiving, from the CI/CD system, a request to access the trusted computing environment in order to execute a first operation;
in response to receiving the request to access the trusted computing environment, executing a security protocol configured to determine whether execution of the first operation is permitted, the determination based at least on first metadata, which is generated based on a portion of the request corresponding to the first operation,
wherein:
if it is determined that execution of the first operation is permitted, the computer-implemented method further comprises granting access to the CI/CD system, thereby enabling it to execute the first operation; and
if it is determined that execution of the first operation is not permitted, the computer-implemented method further comprises preventing the CI/CD from executing the first operation.

2. The computer-implemented method of claim 1, wherein:
the permitted operation database is not accessible to the CI/CD system.

3. The computer-implemented method of claim 1 or claim 2, wherein, either:
the computer-implemented method further comprises generating the first metadata based on a portion of the request corresponding to the first operation; or
the request comprises the first metadata.

4. The computer-implemented method of claim 3, wherein:
the first metadata comprises a first digital signature corresponding to the first operation.

5. The computer-implemented method of claim 4, wherein:
executing the security protocol comprises:
accessing a permitted operation database storing one or more digital signatures, each digital signature corresponding to a respective operation, execution of which is permitted within the trusted computing environment; and
determining whether the first digital signature is present in the permitted operation database,
wherein:
if the first digital signature is present in the permitted operation database, it is determined that execution of the first operation is permitted; and
if the first digital signature is not present in the permitted operation database, it is determined that execution of the first operation is not permitted.

6. The computer-implemented method of claim 4 or claim 5, wherein:
execution of the first operation comprises executing a first piece of code, execution of the first piece of code causing execution of the first operation; and
the first digital signature is a first hash, which is a hash of the first piece of code.

7. The computer-implemented method of any one of claims 1 to 6, wherein:
receiving the request from the CI/CD system comprises:
receiving from the CI/CD system a request to access the trusted computing environment in order to execute a first operation and a second operation;
execution the security protocol is further configured to determine whether execution of the second operation is permitted, the determination based on second metadata generated based on a portion of the request corresponding to the second operation; and
if it is determined that execution of the second operation is permitted, the computer-implemented method further comprises granting access to the CI/CD system thereby enabling it to execute the second operation; and
if it is determined that execution of the second operation is not permitted, the computer-implemented method further comprises preventing CI/CD system from executing the second operation.

8. The computer-implemented method of claim 7, wherein, either:
the computer-implemented method further comprises generating the second metadata based on a portion of the request corresponding to the second operation; or
the request comprises the second metadata.

9. The computer-implemented method of claim 8, wherein:
the second metadata comprises a second digital signature corresponding to the second operation.

10. The computer-implemented method of claim 9, wherein:
executing the security protocol further comprises:
determining whether the second digital signature included in the request is present in the permitted operation database,
wherein:
if the second digital signature included in the request is present in the permitted operation database, it is determined that execution of the second operation is permitted; and
if the digital signature included in the request is not present in the permitted operation database, it is determined that execution of the second operation is not permitted.

11. The computer-implemented method of claim 9 or claim 10, wherein:
execution of the second operation comprises executing a second piece of code, execution of the second piece of code causing execution of the second operation; and
the second digital signature comprises a second hash, which is a hash of the second piece of code.

12. The computer-implemented method of any one of claims 1 to 11, wherein:
the first metadata comprises a first user ID, the first user ID corresponding to a first user of the CI/CD system from whom the request originated.

13. The computer-implemented method of claim 12, wherein:
executing the security protocol comprises:
accessing a permitted user database storing one or more user IDs, each user ID corresponding to a respective user who is permitted to cause execution of an operation within the trusted computing environment; and
determining whether the first user ID is present in the permitted user database,
wherein:
if the first user ID is present in the permitted user database, it is determined that execution of the first operation is permitted; and
if the first user ID is not present in the permitted user database, it is determined that execution of the first operation is not permitted.

14. The computer-implemented method of claim 12, wherein:
executing the security protocol comprises:
accessing a permitted user database storing one or more user IDs, each user ID corresponding to a respective user who is permitted to trigger execution of an operation in the trusted computing environment; and
determining whether the first user ID is present in the permitted user database,
wherein:
if the first user ID is not present in the permitted user database, it is determined that execution the first operation is not permitted; and
if the first user ID is present in the permitted user database, execution of the security protocol further comprises executing an authentication protocol in order to authenticate the first user;
if the first user is authenticated, it is determined that execution of the first operation is permitted; and
it the first user is not authenticated, it is determined that execution of the first operation is not permitted.

15. The computer-implemented method of any one of claims 1 to 14, wherein:
the computer-implemented method is executed by an interceptor module which is located on the trusted computing environment, and which is configured to intercept the request from the CI/CD system.
